Europäisches Patentamt

European Patent Office

Office européen des brevets

(11) Publication number: **0 400 221**
**A1**

## EUROPEAN PATENT APPLICATION

(21) Application number: 89201406.9

(22) Date of filing: 02.06.89

(51) Int. Cl.⁵: **G11B 27/00, G07C 9/00**

(43) Date of publication of application:
**05.12.90 Bulletin 90/49**

(84) Designated Contracting States:
**BE CH DE ES FR GB IT LI**

(71) Applicant: **N.V. Philips' Gloeilampenfabrieken**
**Groenewoudseweg 1**
**NL-5621 BA Eindhoven(NL)**

(72) Inventor: **Custers, Pieter Hendrik**
**c/o INT. OCTROOIBUREAU B.V. Prof.**
**Holstlaan 6**
**NL-5656 AA Eindhoven(NL)**

(74) Representative: **Strijland, Wilfred et al**
**INTERNATIONAAL OCTROOIBUREAU B.V.**
**Prof. Holstlaan 6**
**NL-5656 AA Eindhoven(NL)**

(54) Apparatus for consumer entertainment having a control memory and a detacheable second storage divice that is a background memory with respect to the control memory, and subsystem, remote control means and storage device for use in such apparatus.

(57) In an apparatus for consumer entertainment a particular subsystem produces a representation of audio and/or video signals. For controlling the subsystem with respect to representation mode and/or representation selection, a certain amount of control information is stored. The associated store is structurally embedded in the subsystem. A second storage device can be detacheably inserted into the subsystem. This operates as a background memory for a control memory inside the subsystem.

FIG. 1

**Apparatus for consumer entertainment having a control memory and a detacheable second storage device that is a background memory with respect to the control memory, and subsystem, remote control means and storage device for use in such apparatus.**

FIELD OF THE INVENTION

The invention relates to an apparatus for consumer entertainment, comprising a subsystem for rendering consumer entertainment on the basis of audio and/or video representation, control means for controlling said subsystem as to representation mode and/or representation selection, under control of a selectively readable and programmable digital storage means. Well-known examples of such apparatus are television sets, audio/video tape recorders, compact disk players and others. Digital programming in combination with increased storage capability have made possible a wide variety of control settings for such apparatus. Various examples are:
- standard settings of a television set, that are activatable by a so-called personal preset key;
- presettings for a tuner, that identify a particular transmitter station, a broadcast channel, and others;
- radio data system data, wherein a particular station may broadcast its own identification or name, or characterize its own program, such as -classical music-, -pop music-, talk programs- and other; a consumer could then select among each of these categorial distinctions;
- favourite track selection, notably for Digital Recordings, which allows the listener to positively or negatively select among a series of tunes on a single record or tape;
- play mode selection for a compact disk, such as single play, automatic replay, interspersing with pause, and others;
- edit functions for copying CD-informations to a tape deck;
- volume settings for an amplifier;
- recording timer setting for a video tape recorder.

BACKGROUND ART

A particular example of such an apparatus has been given with respect to favourite track selection in European Patent Application 169 597, corresponding USA Patent No. 4, 779, 252, to the same assignee, herein incorporated by reference. A similar organization of the control may be effected for other fields of use such as have been exemplified supra. A particular disadvantage of the known art is that the storage is physical linked permanently to the apparatus. In consequence, its use is inflexible, the settings are open to tampering by other users, cannot be carried to another apparatus, for example together with the record carrier, and in generally offers only a limited gamma of user facilities.

SUMMARY OF THE INVENTION

Among other things it is an object of the invention to make the control data portable with respect to the apparatus itself, thus disburdening the user while allowing him to move freely, and to allow him to use his prespecified control data on any representative subsystem that understands the code as specified; in like manner a single apparatus may easily adapt to requirements for different users as specified in their carried storage devices. According to a first aspect of the invention. the object is realized in that said digital storage means comprises a first storage device that is structurally embedded in said subsystem and functions as a foreground memory for a second storage device that is detacheably insertable into said apparatus for then functioning as a background memory with respect to said first storage device.

In contradistinction, a computer environment would have the second storage device either contain programs to be executed or data to be processed. In the consumer entertainment specified supra, the data is either stored on a video or audio tape, or is received by broadcast, whereas the program is permanently stored in the apparatus itself: the detacheable storage device now only stored control information as to which one of various modes is to be executed and/or which part of possible representation is to be selected. In consequence, the storage requirement for this particular part is one or more orders of magnitude inferior to the storage capacity of a floppy disk or the like. Notably, the second storage device does not contain the audio and/or video representation information, and itself would not have the storage capacity of a floppy or compact disk or tape reel. Of course, it could contain certain control-linked information that would be representable, such as the name of the owner, the program, broadcast transmitter, subsystem type, or other item the device in question were related to, that would lead to an alphanumerical display, or the like.

The second storage device may be based on a random-accessible array, such as an EEPROM, such as is embeddeable in a so-called smart card, memory card, etcetera, according to worldwide dimensional and other standardizations. Such card may become conditionally operable upon recognition of a keyboard produced PIN-code or the like. The system may be based on a single apparatus or be based on remote control. In the latter case, the second storage device advantageously interfaces to the remote control device.

The invention also relates to a subsystem for rendering consumer entertainment, a remote control means, and a card-shaped storage device for use in an apparatus according to the invention. Further advantageous aspects are recited in dependent Claims.

BRIEF DESCRIPTION OF THE DRAWINGS

The invention will be described more in detail with respect to the following Figures:

Figure 1 is a block diagram of an apparatus for use with the invention;

Figure 2 is a front view of a subsystem for audio representation for use therein;

Figure 3 is a smart card for use with a subsystem as shown in Figure 2;

Figure 4 is remote control means for use with the invention.

DESCRIPTION OF A PREFERRED EMBODIMENT

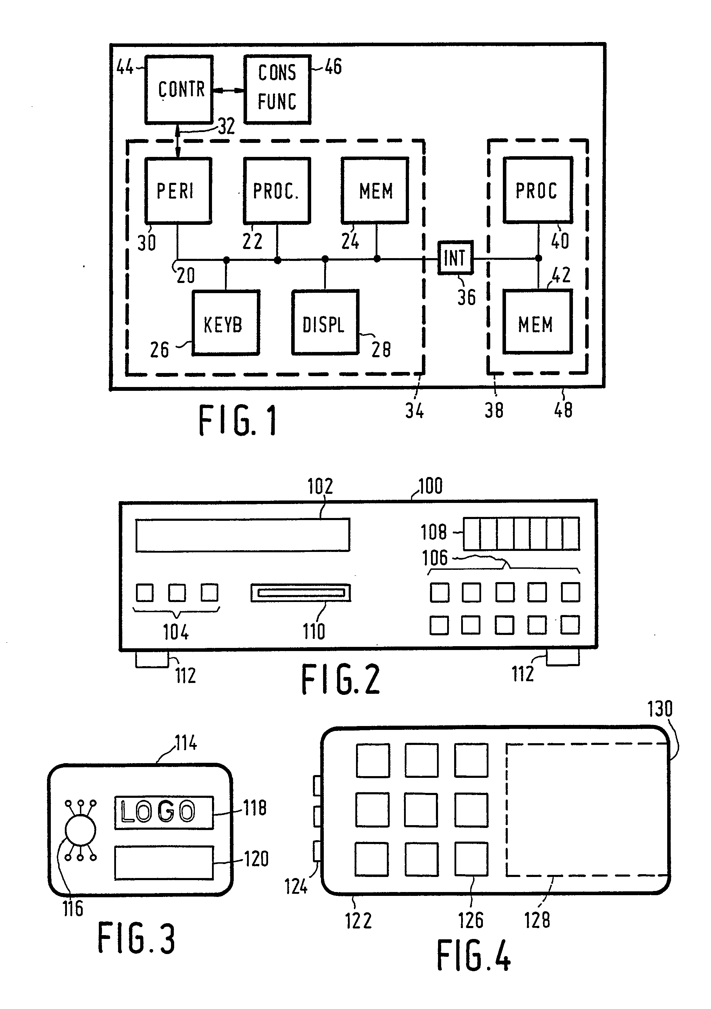

Figure 1 is à block diagram of an apparatus for use with the invention. As shown, the apparatus is a physically stand-alone box 48. Block 46 represents the consumer function for rendering audio and/or video representation. For brevity, the source of the data has not been shown, it may be broadcast, record carrier, or other. Output may be effected by standard elements, such as loudspeaker, CRT or other. It is understood that the control according to the invention can be effected at a single level at a time only, or in parallel at various levels simultaneously. For example, in a television set, the transmitter selection, picture in picture display and picture settings may be independent. Block 44 represents the control for block 46. It may contain all kinds of filtering, multiplexing/demultimplexing, tuning to a particular source, drive control for a record carrier, control for mitigating deficiencies in the information to be represented, such as error control, adjustment for aging of parts, and others. Block 34 represents the control for controlling the representation subsystem as to representation mode and/or representation selection as recited supra. To this effect, block 34 contains a foreground memory 24, a processor 22, a peripheral interface element 30, a keyboard device 26 and a display device 28. All these elements are interconnected by bus 20, which may be a so-called I²C bus as disclosed in US patent 4,689,740 to the same assignee. Peripheral interface 30 recognizes commands for controller 44 to therein load the specification of representation mode and/or representation selection. Processor 22 executes standard functions such as interrogating the keyboard, accessing the memory, feeding the display with data to-be-displayed and forwarding commands to peripheral interface 30. Blocks 34, 44 and 46 could, in combination, execute the functions described in referenced EP application 169 597 for a favourite-track-selection-organization. In similar way, such set up could function for effecting various other selectivity as described. For brevity, this has not been explained further.

Block 38 represents the second storage device that operates as a background memory with respect to foreground memory 24. The latter may store particular data after reading such from background memory 42. The latter may be executed as an EEPROM (electrically erasable) which while disconnected requires no permanent power for data retainment. An alternative realization is in static RAM with battery backup not shown. For security enhancement block 38 would represent only one single chip that also contains processor 40. Upon insertion of element 38 into the subsystem for audio and/or video representation, processor 40 would allow access to memory 38 only under recognition of an entry code entered on keyboard 26 and forwarded via interface element 36 to processor 40. A preferred capability of storage device 42 would be 2 kbyte. If the code is recognized, all access operations are allowed. In case of non-recognition, either access could be denied, or only read-accesses would be allowed. In case of a compact-disk fts-organization, upon allowed access, the player would recognize the disk's identity which is given by a particular information on the disk and thereupon read from the memory 42 the information pertaining to the disk in question. For this reason, a small amount of the capacity of memory 42 is set aside to provide a table of contents in terms of disk-identifiers. In case of a favourable hit, the hit results in a further address in memory 42, and, if required, in a storage length therein. This allows read out of the relevant information. Other information is retained in memory 42. Reading is generally non-destructive. The protocol on the bus within device 38 may be the same as on bus 20, or may have an own format. The interface element 36 handles data transfer. Furthermore, device 38 may receive electrical power from subsystem 34 along interconnections not shown or by means of inductive powering. As long as this power is absent or insufficient, device 38 remains non-operative. By itself, such powering is well-known. Memory 24 may have a specific part that is dedicated to storing data from memory 42. The capacity of this part is smaller than the capacity of memory 42, which is the reason that memory 42 functions as a background memory. On the other hand, the total capacity of memory 24 need not be smaller, inasmuch as various other data and control signals could be stored that might be unrelated to the assisting information from memory 42.

In similar way, other representation mode/representation selection control information could be stored in memory 42. The reading thereof may be effected in the right circumstances, i.e. when the storage device is loaded in the right subsystem and/or the correct PIN-code is entered and/or the correct data carrier is present or tuning on the correct station/type has been effected. The information from memory 42 in consequence is always adjunct to the situation actually existing. Storage device 38 can be detached. Thereupon no data may be delivered. However, such data as would still be present in memory 24 could remain operative. In consequence, a single storage device 38 may be used to quasi-simultaneously program a plurality of subsystems. However, for certain safety reasons, the opposite tactics could apply as well.

Figure 2 is a front view of a subsystem for rendering an audio representation in an apparatus according to the invention. The subsystem is a deck for compact disks. Power amplifier and loudspeaker subsystems reside in separate casings not shown. Casing 100 has a substantially rectangular front. Elements 112 are shock-absorbing supports. Item 102 is the front cover of a drawer for therein loading a compact disk record. Loading and unloading is possible when drawer is in foremost position; playing and other data exchange operations, such as reading the table of contents (TOC) is possible when the drawer is fully slid inside. Disk drive mechanism, feed-back and read out mechanisms may be standard and are not discussed further. Control is by control keys 104 and numerical keys 106. Often the number of keys is higher. A seven-digit display 108 has been provided. The second storage device, physically dimensioned as a credit card, can be inserted into slit 110 that is horizontal. Upon full insertion of the card, a microswitch triggers and powering is started. Then the data processing operations may be effected. Removal of the card is effected by hand: even when fully inserted a more or less small part still extends outside the slit. However, this part is never more thant 50%, usually much smaller, such as 10% of the card area. In similar way, other fixings may be effected, such as injective hand-pushing, and ejecting under key action control, positioning of the card under a lid that covers the full card area and others.

A similar disposition can be made in case of other subsystems. In a TV set, the card slit may be vertical. In a so-called Hifi-tower, that consists of a plurality of subsystems (hifi-tuner, amplifier, cassette deck, CD-player) one of these may have the slit, and others could receive the control signals via an external interconnection. In that case, block 30 could interface to an external bus, such as $D^2B$ bus as described in United States patent 4,429,384 or a so-called Home Bus, that subsequently connects to a next-following subsystem. In Figure 1, the bus 20 could have two peripheral adapters, one for local consumer function, and one to the $D^2B$ bus that in another subapparatus again would interface to the internal $I^2C$ bus.

Figure 3 shows a smart card for use with subsystem as shown in Figure 2. The dimensions have been standardized by international agreement. Item 116 shows an insert part wherein the chip proper is located. On top and bottom three interconnection pads are shown, which interact with metal feelers present in slit 110 in Figure 2. The number shown by itself is arbitrary. Alternatively, power may be delivered by inductive loop, and also data may be transferred by optical, capacitive or other way. Item 118 represents an indication, which can be a logo of the issuing or manufacturing entity, or an indication of the intended use of the memory card in question. Item 120 represents an area on which user information can be physically written, such as the CD-record name to which the track information pertains. This writing may preferably be by pencil, although ballpoint would be acceptable as well. Writing is facilitated by particular degree of roughness which is apt for such writing. By itself, it is known to provide magstripe credit cards with a one-time signature. Strip 120 in any way should not be glossy. The area 120 may be arbitrary, it may be preprinted with a line pattern to allow the user to more easily and regularly set up a table of entries. If the area of 120 is not too rough, the data entered may be physically erased again, for example by a piece of Indiarubber or a suitable solvent.

Figure 4 shows a remote control means for use with the invention. The casing 122 is such as to be handheld. A length of 20 centimeters, a width of 8 centimeters, and a thickness of 1-2 centimeters would be adequate. The front end has infra-red-emitters for communicating digital information in a way customary for controlling home-entertainment apparatus by remote control. The rear side has a slit 130 (shown by interrupted lines 128) for detacheably inserting the memory card of Figure 3. Similarly ergonomy requirements apply as with respect to Figure 2. By way of illustration, a set of control keys 126 has been shown. In practice the number will be larger (c.f. Figure 2). If required, a display is provided. Alternatively, the subsystem's own display (item 108 in Figure 2) will suffice. The remote control device is powered by battery, that also powers the memory card, when inserted.

## Claims

1. Apparatus for consumer entertainment, comprising a subsystem for rendering consumer entertainment on the basis of audio and/or video representation, control means for controlling said subsystem as to representation mode and/or representation selection, under control of a selectively readable and programmable digital storage means, characterized in that said digital storage means comprises a first storage device that is structurally embedded in said subsystem and functions as a foreground memory for a second storage device that is detacheably insertable into said apparatus for then functioning as a background memory with respect to said first storage device.

2. Apparatus as claimed in Claim 1, wherein said apparatus is a player for reproducing information from a standard record carrier which is positioned at a first positioning means of said apparatus, and said apparatus has a second positioning means for thereat positioning said second storage device.

3. Apparatus as claimed in Claim 2, wherein said standard record carrier is a compact disk.

4. An apparatus as claimed in Claim 1, 2 or 3, wherein said second storage device comprises an electrically writeable array memory.

5. An apparatus as claimed in any of Claims 1 to 4, wherein said second storage device is smart card contained.

6. An apparatus as claimed in Claim 5, wherein said smart card has processor means for selectively becoming operative under control of an input code receiveable from said subsystem under keyboard control of a keyboard that is structurally united with said apparatus.

7. An apparatus as claimed in any of Claims 1 through 6, wherein said control means comprise a remote control means and said second storage device is detacheably insertable into said remote control means.

8. An apparatus as claimed in any of Claims 1 through 7, wherein said apparatus comprises a first sub-apparatus which comprises said subsystem and also comprises a second-sub-apparatus that is structurally disjunct from said first sub-apparatus and comprises a second subsystem for rendering consumer entertainment on the basis of audio and/or video representation, said second storage device is detacheably insertable into said second sub-apparatus and both said sub-apparatuses are interconnected for intercommunicating control information derived by said second sub-apparatus from said second storage device.

9. An apparatus as claimed in any of Claims 1 through 8, wherein said second storage device is provided with an area for being physically written on.

10. A subsystem for rendering consumer entertainment on the basis of audio and/or video representation for use in an apparatus as claimed in any of Claims 1 through 9.

11. A subsystem as claimed in Claim 10, characterized in that it has a substantially rectangular control area surface, and is provided with slit means substantially parallel along one rectangle-side for therein positioning said second storage device, the latter therein being positionable for more than 50% but less than 100% of its volume, thus being manually retractable.

12. A subsystem as claimed in Claim 10, characterized in that it has fixing means for therein temporally fixing said second storage device in a spatially fixed position.

13. A remote control means for controlling a subsystem for rendering consumer entertainment on the basis of audio and/or video representation for use in an apparatus as claimed in any of Claims 1 through 9, characterized in that it has a handholdable shape, keyboard means, and fixing means for therein temporally fixing said second storage device in a spatially fixed position.

14. A card-shaped storage device for being detacteably inserted into a subsystem for rendering consumer entertainment on the basis of audio and/or video representation for use in an apparatus as claimed in any of Claims 1 through 9, characterized in that it is dimensioned as a credit card and is provided with an electrically writeable read only memory (EEPROM).

15. A card as claimed in Claim 12, characterized in that it is provided with an area for being physically written.

16. A card as claimed in Claim 13 wherein said area is physically erasable.

17. A card as claimed in Claims 12, 13 or 14, characterized in that it is provided with recognition means for conditionally upon recognition of predetermined keyboard entered code information granting access to said second storage device.

18. A card as claimed in Claim 15, wherein upon non-recognition only a restricted access is granted to said second storage device.

FIG.1

FIG.2

FIG.3

FIG.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | EP-A-0265167 (PIONEER ELECTRONIC)<br>* column 14, line 50 - column 17, line 46; figures 6, 19, 23, 24 *<br>* abstract * | 1-5 | G11B27/00<br>G07C9/00 |
| A | | 6 | |
| A | FR-A-2517863 (D.MOULENE)<br>* page 7, line 9 - page 10, line 17; claims 1-12; figures 1, 3 * | 1-4, 7 | |
| A | DE-A-3706465 (SIEMENS)<br>* the whole document * | 5-7, 9, 13, 14, 17 | |
| A | PATENT ABSTRACTS OF JAPAN<br>vol. 7, no. 262 (P-238)(1407) 22 November 1983,<br>& JP-A-58 143478 (KONPIYUUTAA SERVICE) 26 August 1983,<br>* the whole document * | 1-4, 7-12, 15 | |
| A | DE-A-3435697 (ROBERT BOSCH) | | **TECHNICAL FIELDS SEARCHED (Int. Cl.5 )** |
| A | DE-U-8708198.9 (SYSTEC) | | G07F |
| A | EP-A-178809 (J.D.WIEDERMEIER) | | G06K<br>G07C<br>G11B |

The present search report has been drawn up for all claims

| Place of search | Date of completion of the search | Examiner |
|---|---|---|
| THE HAGUE | 05 FEBRUARY 1990 | DAVID J.Y.H. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P0401)